# EUROPÄISCHE PATENTSCHRIFT

(11) **EP 3 428 041 B1**
(45) Veröffentlichungstag und Bekanntmachung des Hinweises auf die Patenterteilung: **26.05.2021**
(21) Anmeldenummer: 18179048.6
(22) Anmeldetag: 21.06.2018
(51) Int. Cl.: B62D 1/16, B62D 5/00, B62D 1/28

(54) **MULTIFUNKTIONALE LENKSÄULE, KRAFTFAHRZEUG UND VERFAHREN ZUM BETREIBEN EINES KRAFTFAHRZEUGS**
MULTIFUNCTIONAL STEERING COLUMN, MOTOR VEHICLE AND METHOD FOR OPERATING A MOTOR VEHICLE
COLONNE DE DIRECTION MULTIFONCTIONNELLE, VÉHICULE AUTOMOBILE ET PROCÉDÉ DE FONCTIONNEMENT D'UN VÉHICULE AUTOMOBILE

(30) Priorität: 11.07.2017 DE 102017211859
(43) Veröffentlichungstag der Anmeldung: 16.01.2019
(73) Patentinhaber: VOLKSWAGEN AKTIENGESELLSCHAFT, 38440 Wolfsburg (DE)
(72) Erfinder: Sjenar, Dzemal, 38448 Wolfsburg (DE); Schulz, Oliver, 38102 Braunschweig (DE)

(56) Entgegenhaltungen:
- EP-A2- 0 447 626
- EP-A2- 0 974 507
- DE-A1- 10 103 667
- DE-A1- 10 302 559
- DE-A1- 19 645 404
- DE-A1- 19 806 458
- DE-A1-102007 002 266
- DE-A1-102014 117 718
- DE-A1-102015 204 332
- DE-A1-102015 225 888
- US-A1- 2014 200 770

## Beschreibung

Multifunktionale Lenksäule, Kraftfahrzeug und Verfahren zum Betreiben eines Kraftfahrzeugs Die vorliegende Erfindung betrifft eine multifunktionale Lenksäule für ein Kraftfahrzeug. Ferner betrifft die Erfindung ein autonom fahrbares Kraftfahrzeug mit einer derartigen Lenksäule sowie ein Verfahren zum Betreiben eines solchen Kraftfahrzeugs.

Bei modernen Kraftfahrzeugen sind Fahrerassistenzsysteme bekannt, welche den Fahrer des Kraftfahrzeugs in bestimmten Situationen, wie z. B. beim Einparken, beim Geradeausfahren, beim Bremsen oder beim Ausweichen von Hindernissen, unterstützen. Unter den bekannten Fahrerassistenzsystemen spielen autonome Steuerungssysteme eine besondere Rolle, da diese ausgebildet sind, die Aufgaben des Fahrers für einen längeren Zeitraum zu übernehmen, ohne dass hierbei ein Interagieren des Fahrers erforderlich ist. Mittels eines autonomen Steuerungssystems ist das Kraftfahrzeug unter Einhaltung vorgegebener Rechtsnormen, wie z. B. der deutschen Straßenverkehrsordnung, an einen Zielort automatisch navigierbar.

Um dem Fahrer während des autonomen Betriebs des Kraftfahrzeugs einen möglichst großen Komfort zu bieten bzw. ein unbeabsichtigtes Lenken durch den Fahrer zu vermeiden, sind unterschiedliche Lenksäulen entwickelt worden. Aus der DE 10 2016 111 473 A1 ist eine Lenkradbaugruppe für ein Kraftfahrzeug bekannt, bei der ein Lenkrad der Lenkradbaugruppe mittels einer Lenkradverriegelungskomponente gegen ein Drehen verriegelbar ist. Ferner ist eine Lenkwelle der Lenkradbaugruppe mittels einer Lenkwellenverriegelungskomponente gegen ein axiales Verschieben verriegelbar. Mittels einer solchen Lenkradbaugruppe ist das Lenkrad von einer Betriebsstellung in eine Ruhestellung verfahrbar, in welcher das Lenkrad beispielsweise in einer Instrumententafel versenkt ist. Die DE 10 2016 110 791 A1 zeigt ebenfalls eine Lenkradbaugruppe, welche für ein autonom betreibbares Fahrzeug ausgebildet ist, bei der das Lenkrad in die Instrumententafel einfahrbar ausgebildet ist. DE 196 45 504 offenbart den Oberbegriff des Anspruchs 1.

Bekannte Lenkradbaugruppen haben den Nachteil, dass ein Einkoppeln des Lenkrads mit der Lenkwelle nur in einer Neutralstellung möglich ist. Ein Einkoppeln des Lenkrads während einer Kurvenfahrt bzw. während eines Richtungswechsels ist nicht möglich. Dies hat den Nachteil, dass ein Abschalten des autonomen Steuerungssystems sowie ein Übernehmen der Kontrolle über das Kraftfahrzeug durch den Fahrer nur unter bestimmten Voraussetzungen möglich und somit bei Nichterfüllung dieser Voraussetzungen nicht möglich sind.

Es ist daher die Aufgabe der vorliegenden Erfindung, eine multifunktionale Lenksäule für ein Kraftfahrzeug, ein Kraftfahrzeug sowie ein Verfahren zum Betreiben eines Kraftfahrzeugs bereitzustellen, welche die Nachteile des Stands der Technik nicht aufweisen oder zumindest teilweise nicht aufweisen. Es ist insbesondere die Aufgabe der vorliegenden Erfindung, eine multifunktionale Lenksäule für ein Kraftfahrzeug, ein autonom betreibbares Kraftfahrzeug mit einer solchen Lenksäule sowie ein Verfahren zum Betreiben eines derartigen Kraftfahrzeugs zu schaffen, welche auf eine einfache sowie kostengünstige Art und Weise ein Umschalten von autonomer Steuerung auf manuelle Steuerung verbessern.

Voranstehende Aufgabe wird durch die Patentansprüche gelöst. Demnach wird die Aufgabe durch eine multifunktionale Lenksäule gemäß dem unabhängigen Anspruch 1, ein zum autonomen Fahren ausgebildetes Kraftfahrzeug gemäß dem unabhängigen Anspruch 8 sowie ein Verfahren zum Betreiben eines erfindungsgemäßen Kraftfahrzeugs gemäß dem unabhängigen Anspruch 9 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Lenksäule beschrieben sind, selbstverständlich auch im Zusammenhang mit dem erfindungsgemäßen Kraftfahrzeug sowie dem erfindungsgemäßen Verfahren und jeweils umgekehrt.

Gemäß dem ersten Aspekt der Erfindung wird die Aufgabe durch eine multifunktionale Lenksäule für ein Kraftfahrzeug gelöst. Die Lenksäule weist eine Lenkkonsole zum Anbinden der Lenksäule an eine Karosserie des Kraftfahrzeugs, ein an der Lenkkonsole gehaltenes Lenkrohr mit einer Lenkrohrachse, einem Lenkradanschluss zum mechanischen Koppeln der Lenksäule mit einem Lenkrad und einem Lenkgetriebeende, an dem eine Lenkgetriebekupplung mit einem Lenkgetriebeanschluss zum mechanischen Koppeln mit einem Lenkgetriebe des Kraftfahrzeugs angeordnet ist, auf. Überdies weist die Lenksäule eine erste Aktuatorvorrichtung zum Verstellen eines ersten Lenkwinkels des Lenkradanschlusses um die Lenkrohrachse relativ zur Lenkkonsole sowie eine Steuerungsvorrichtung zum Steuern der ersten Aktuatorvorrichtung und der Lenkgetriebekupplung auf. Die Lenkgetriebekupplung ist zum mechanischen Koppeln des Lenkrohres mit dem Lenkgetriebe des Kraftfahrzeugs in einer Koppelstellung und zum mechanischen Entkoppeln des unteren Lenkrohres von dem Lenkgetriebe des Kraftfahrzeugs in einer Entkoppelstellung ausgebildet. Erfindungsgemäß weist die Lenksäule einen ersten Lenkwinkelsensor zum Erfassen des ersten Lenkwinkels des Lenkradanschlusses um die Lenkrohrachse sowie einen zweiten Lenkwinkelsensor zum Erfassen eines zweiten Lenkwinkels des Lenkgetriebeanschlusses um die Lenkrohrachse auf. Die Steuerungsvorrichtung ist ausgebildet, die erste Aktuatorvorrichtung derart zu steuern, dass der erste Lenkwinkel dem zweiten Lenkwinkel angepasst wird. Ferner ist die Steuerungsvorrichtung weiter ausgebildet, die Lenkgetriebekupplung in die Koppelstellung zu verstellen, wenn der erste Lenkwinkel dem zweiten Lenkwinkel entspricht.

Unter einer multifunktionalen Lenksäule wird im Rahmen der Erfindung eine Lenksäule verstanden, die für mehrere unterschiedliche Lenkungsmodi ausgebildet ist. Die Lenksäule weist somit neben einer direkten Übertragung eines Lenkwinkels vom Lenkrad auf das Lenkgetriebe mehrere weitere Funktionen auf. Mittels der Lenkkonsole ist die Lenksäule an die Karosserie des Kraftfahrzeugs anbindbar, beispielsweise anschraubbar. Auf diese Weise kann gewährleistet werden, dass das Lenkrohr in einem definierten Winkel zur Karosserie an dieser gehalten ist. Vorzugsweise weist die Lenkkonsole ein Verstellmittel zum Verstellen eines Neigungswinkels des Lenkrohrs zur Karosserie auf. Das Verstellmittel ist vorzugsweise automatisch betätigbar und weiter bevorzugt von der Steuerungsvorrichtung steuerbar. Vorzugsweise weist das Verstellmittel eine Selbsthemmung auf, sodass bei nicht angesteuertem Verstellmittel der Neigungswinkel des Lenkrohrs konstant gehalten wird.

Das Lenkrohr hat beispielsweise die Funktion, einen vom Fahrer des Kraftfahrzeugs über das Lenkrad vorgegebenen ersten Lenkwinkel an ein Lenkgetriebe des Kraftfahrzeugs zu übertragen. Das Lenkrohr ist um die Lenkrohrachse relativ zur Lenkkonsole verdrehbar. Eine relative Verdrehung des Lenkrohrs zur Lenkkonsole wird durch den ersten Lenkwinkel bestimmt. Bei einem für eine Geradeausfahrt ausgerichteten Lenkrad beträgt der erste Lenkwinkel 0°. Das Lenkrohr ist über den Lenkradanschluss mit einem Lenkrad mechanisch koppelbar. Der Lenkradanschluss ist an einem ersten Ende des Lenkrohrs angeordnet bzw. in diesem ausgebildet und weist beispielsweise eine Verzahnung auf, die mit einer entsprechenden Verzahnung des Lenkrads in Eingriff bringbar ist, um ein relatives Verdrehen von Lenkrad zum Lenkrohr zu vermeiden sowie eine korrekte Ausrichtung des Lenkrads zum Lenkrohr bei der Montage des Lenkrads zu erleichtern. Das Lenkgetriebeende ist an einem dem Lenkradanschluss entgegengesetzten zweiten Ende des Lenkrohrs ausgebildet.

An dem Lenkgetriebeende ist die Lenkgetriebekupplung angeordnet und mit diesem beispielsweise verschraubt, verpresst, verklemmt, verschweißt oder dergleichen. Ein Teil der Lenkgetriebekupplung kann auch integral mit dem Lenkrohr ausgebildet sein. An einer von dem Lenkrohr wegweisenden Seite der Lenkgetriebekupplung ist der Lenkgetriebeanschluss der Lenkgetriebekupplung angeordnet. Der Lenkgetriebeanschluss ist um den zweiten Lenkwinkel relativ zur Lenkkonsole verdrehbar. Der zweite Lenkwinkel ist vorzugsweise proportional zu einer Lenkstellung der Räder des Kraftfahrzeugs. In der Koppelstellung ist der Lenkgetriebeanschluss drehfest mit dem Lenkrohr mechanisch gekoppelt. Die Koppelstellung ist für einen Notbetrieb der Lenksäule vorgesehen, in der eine Übertragung eines Lenkwinkels vom Lenkrad über das Lenkrohr direkt auf das Lenkgetriebe übertragbar ist. Im Notbetrieb entspricht der erste Lenkwinkel dem zweiten Lenkwinkel. In der Entkoppelstellung sind Lenkgetriebeanschluss und Lenkrohr relativ zueinander verdrehbar. Die Entkoppelstellung ist für den Normalbetrieb des Kraftfahrzeugs vorgesehen, wobei der Normalbetrieb zwei Betriebsmodi aufweist, nämlich einen Steer by Wire Betriebsmodus, also einen Betriebsmodus bei der ein mittels des Lenkrads vorgegebener erster Lenkwinkel mechanisch entkoppelt auf das Lenkgetriebe übertragen wird, und der autonome Betriebsmodus, bei dem das Lenkrad komplett vom Lenkgetriebe entkoppelt ist und der erste Lenkwinkel für die Steuerung des Kraftfahrzeugs irrelevant ist. Im Steer by Wire Betriebsmodus kann vorgesehen sein, dass der erste Lenkwinkel dem zweiten Lenkwinkel entspricht. Vorzugsweise entspricht eine Veränderungsrichtung des ersten Lenkwinkels der Veränderungsrichtung des zweiten Lenkwinkels, sodass sich der erste Lenkwinkel und der zweite Lenkwinkel um einen positiven, von 1 verschiedenen Faktor unterscheiden. Somit kann ein Verstellen des ersten Lenkwinkels beispielsweise ein geringeres oder größeres Verstellen des zweiten Lenkwinkels bewirken. Der unterscheidende Faktor ist vorzugsweise von einer Fahrzeuggeschwindigkeit abhängig festlegbar, sodass mit steigender Geschwindigkeit ein Verstellen des ersten Lenkwinkels ein geringeres Verstellen des zweiten Lenkwinkels bewirkt.

Die erste Aktuatorvorrichtung ist zum Drehen des Lenkrohrs um die Lenkrohrachse und somit zum Verstellen des ersten Lenkwinkels ausgebildet. Auf diese Weise ist mittels der ersten Aktuatorvorrichtung beispielsweise ein Force-Feedback im Steer by Wire Betriebsmodus auf das Lenkrohr und somit das Lenkrad übertragbar. Das bedeutet, dass beim Fahren von der Straße auf die Räder des Kraftfahrzeugs wirkende Kräfte somit für den Fahrer spürbar gemacht werden können. Hierbei ist es bevorzugt, dass eine Intensität dieser übertragenen Kräfte geringer ist, als jene Kräfte, welche bei einer starren mechanischen Kopplung von Lenkgetriebe und Lenkrohr tatsächlich übertragen worden wären. Auf diese Weise wird eine übermäßige Belastung des Fahrers vermieden sowie ein Fahrkomfort erhöht. Ferner ist mittels der ersten Aktuatorvorrichtung möglich, den ersten Lenkwinkel durch Drehen des Lenkrohrs dem zweiten Lenkwinkel anzupassen.

Der erste Lenkwinkel ist mittels des ersten Lenkwinkelsensors und der zweite Lenkwinkel ist mittels des zweiten Lenkwinkelsensors erfassbar. Die Steuerungsvorrichtung ist ausgebildet, die erste Aktuatorvorrichtung und die Lenkgetriebekupplung zu steuern. Die Steuerungsvorrichtung ist dabei ausgebildet, den ersten Lenkwinkel über den ersten Lenkwinkelsensor und den zweiten Lenkwinkel über den zweiten Lenkwinkelsensor zu ermitteln. Ferner ist die Steuerungsvorrichtung ausgebildet, die erste Aktuatorvorrichtung derart zu steuern bzw. zu regeln, dass der erste Lenkwinkel dem zweiten Lenkwinkel angepasst wird. Schließlich ist die Steuerungsvorrichtung ausgebildet, die Lenkgetriebekupplung in die Koppelstellung zu verstellen, wenn der erste Lenkwinkel und der zweite Lenkwinkel einander entsprechen.

Die erfindungsgemäße multifunktionale Lenksäule hat gegenüber herkömmlichen Lenksäulen den Vorteil, dass drei Betriebsmodi realisierbar sind, nämlich ein Steer by Wire Betriebsmodus, ein autonomer Betriebsmodus sowie ein Notbetriebsmodus. Über die erste Aktuatorvorrichtung und die Steuerungsvorrichtung kann im Steer by Wire Betriebsmodus ein Force Feedback an dem Lenkrohr simuliert werden, um dem Fahrer ein realitätsnahes Lenkgefühl zu geben, welches von der Straße auf das Lenksystem wirkende Kräfte widerspiegelt bzw. zumindest teilweise widerspiegelt. Im autonomen Betriebsmodus ist eine derartige mechanische Entkopplung des Lenkrohrs vom Lenkgetriebe erzielbar, dass ein Verändern des zweiten Lenkwinkels keine Veränderung des ersten Lenkwinkels bewirkt. Im Notbetriebsmodus sind Lenkrohr und Lenkgetriebeanschluss miteinander derart mechanisch gekoppelt, dass eine Veränderung des ersten Lenkwinkels eine entsprechende Veränderung des zweiten Lenkwinkels bewirkt. Die erfindungsgemäße Lenksäule hat den weiteren Vorteil, dass ein sicheres Umschalten vom autonomen Betriebsmodus in den Steer by Wire Betriebsmodus sowie den Notbetriebsmodus auch dann möglich ist, wenn der zweite Lenkwinkel von 0° verschieden ist, das Kraftfahrzeug also nicht geradeaus fährt. Der Fahrer kann die Kontrolle des Kraftfahrzeugs demnach auch während einer Kurvenfahrt sicher übernehmen.

Gemäß einer bevorzugten Weiterentwicklung der Erfindung kann bei einer Lenksäule vorgesehen sein, dass die erste Aktuatorvorrichtung einen ersten Elektromotor und ein erstes Planetengetriebe aufweist, wobei der erste Elektromotor über das erste Planetengetriebe mit dem Lenkrohr derart mechanisch gekoppelt ist, dass das Lenkrohr mittels der ersten Aktuatorvorrichtung um die Lenkrohrachse drehbar ist. Das erste Planetengetriebe ist vorzugsweise über einen ersten Riementrieb, insbesondere einem Zahnriementrieb, mit dem Lenkrohr mechanisch gekoppelt. Vorzugsweise ist die erste Aktuatorvorrichtung ausgebildet, Drehmomente von zwischen 20 und 40 Nm auf das Lenkrohr zu übertragen. Eine derartige erste Aktuatorvorrichtung weist einen kompakten sowie robusten Aufbau auf und ermöglicht ein schnelles Verstellen des ersten Lenkwinkels. Daher ist eine solche erste Aktuatorvorrichtung für eine Lenksäule besonders geeignet.

Es ist erfindungsgemäß vorgesehen, dass das Lenkrohr ein oberes Lenkrohr und ein unteres Lenkrohr aufweist, wobei das obere Lenkrohr und das untere Lenkrohr relativ zueinander entlang der Lenkrohrachse verschiebbar sind. Die Lenksäule weist eine zweite Aktuatorvorrichtung zum relativen Verschieben des oberen Lenkrohrs zum unteren Lenkrohr auf. Die Steuerungsvorrichtung ist ausgebildet, die zweite Aktuatorvorrichtung zu steuern. Dabei ist die Steuerungsvorrichtung vorzugsweise derart ausgebildet, das erste Lenkrohr und das zweite Lenkrohr bei autonomem Fahrbetrieb derart zusammen zu verfahren, dass das Lenkrad in einer Instrumententafel des Kraftfahrzeugs versenkbar ist. Somit wird mit einfachen Mitteln gewährleistet, dass der Fahrer einen vergrößerten Bewegungsraum und somit einen verbesserten Fahrkomfort erhält. Ferner kann durch ein mehrteiliges Lenkrohr eine für den Steer by Wire Betriebsmodus sowie den Notbetriebsmodus bessere Anpassung einer Lenkradposition des Lenkrads zum Fahrer erfolgen.

Weiter bevorzugt weist die zweite Aktuatorvorrichtung einen zweiten Elektromotor, ein zweites Planetengetriebe sowie einen Spindeltrieb auf, wobei der zweite Elektromotor über das zweite Planetengetriebe und den Spindeltrieb mit dem oberen Lenkrohr oder dem unteren Lenkrohr mechanisch gekoppelt ist. Das zweite Planetengetriebe ist vorzugsweise über einen zweiten Riementrieb, insbesondere einen Zahnriementrieb, mit dem Spindeltrieb mechanisch gekoppelt. Eine derartige zweite Aktuatorvorrichtung weist einen kompakten sowie robusten Aufbau auf und ermöglicht ein schnelles relatives Verschieben von oberem Lenkrohr und unterem Lenkrohr. Daher ist eine solche zweite Aktuatorvorrichtung für eine Lenksäule besonders geeignet.

Es ist bevorzugt, dass die Steuerungsvorrichtung ausgebildet ist, die erste Aktuatorvorrichtung bei in der Entkoppelstellung eingestellter Lenkgetriebekupplung derart zu steuern, dass die erste Aktuatorvorrichtung den ersten Lenkwinkel in Abhängigkeit einer Veränderung des zweiten Lenkwinkels verändert. Auf diese Weise wird ein besonders realitätsnaher sowie zuverlässiger Steer by Wire Betriebsmodus, bei welchem der Fahrer ein exaktes Feedback von auf das Lenkgetriebe wirkenden Lenkmomenten erhält, mit einfachen Mitteln gewährleistet.

In einer besonders bevorzugten Ausgestaltung der Erfindung ist die Lenkgetriebekupplung als Magnetkupplung ausgebildet. Die Magnetkupplung ist vorzugsweise derart ausgebildet, Drehmomente von mindestens 60 bis 80 Nm zu übertragen. Mittels einer Magnetkupplung ist ein schnelles sowie zuverlässiges Verstellen zwischen der Koppelstellung und der Entkoppelstellung mit einfachen Mitteln gewährleistbar. Dies hat den Vorteil, dass im Falle eines erforderlichen Notfallbetriebs der Lenksäule, eine starre mechanische Kopplung des Lenkrads bzw. des Lenkradanschlusses mit dem Lenkgetriebeanschluss durch ein entsprechendes Ansteuern der Lenkgetriebekupplung schnell realisierbar ist.

Weiter bevorzugt ist die Lenkgetriebekupplung derart ausgebildet, dass die Lenkgetriebekupplung bei Beaufschlagung mit einem Steuerstrom in die Entkoppelstellung und bei abgestelltem Steuerstrom automatisch in die Koppelstellung gebracht wird. Im normalen Betriebsmodus, also z. B. im autonomen Betriebsmodus oder im Steer by Wire Betriebsmodus, ist die Lenkgetriebekupplung mit dem Steuerstrom beaufschlagbar, um diese in der Entkoppelstellung zu halten und eine direkte Drehmomentübertragung zwischen Lenkrohr und Lenkgetriebe somit zu verhindern. Zum direkten mechanischen Koppeln von Lenkrohr und Lenkgetriebe reicht es aus, den Steuerstrom abzuschalten, da die Lenkgetriebekupplung auf diese Weise automatisch in die Koppelstellung bringbar ist. Hierfür kann beispielsweise vorgesehen sein, dass die Lenkgetriebekupplung eine Feder oder dergleichen zum Bereitstellen einer Rückstellkraft aufweist, welche von der Entkoppelstellung in die Koppelstellung wirkt. Eine derart ausgebildete Lenkgetriebekupplung hat insbesondere den Vorteil, dass diese bei einem Stromausfall automatisch in die Koppelstellung gebracht wird, sodass ein manuelles Steuern durch den Fahrer in dem Notbetriebsmodus möglich ist.

Vorzugsweise ist die Steuerungsvorrichtung derart ausgebildet, die erste Aktuatorvorrichtung bei in der Koppelstellung eingestellter Lenkgetriebekupplung zum Verstärken eines über den Lenkradanschluss eingebrachten Lenkmoments zu steuern. In der Koppelstellung ist eine direkte Drehmomentübertragung zwischen dem Lenkrohr und dem Lenkgetriebe über die Lenkgetriebekupplung möglich. Zum manuellen Verstellen des ersten Lenkwinkels und somit des zweiten Lenkwinkels müssen in bestimmten Fahrsituationen besonders hohe Lenkmomente aufgebracht werden. Die Steuerungsvorrichtung ist dabei derart ausgebildet, eine über den Lenkradanschluss eingebrachte Lenkaktion eines Fahrers des Kraftfahrzeugs zu erfassen und die erste Aktuatorvorrichtung derart anzusteuern, dass der erste Lenkwinkel in Richtung der Lenkaktion verändert wird. Auf diese Weise ist die Lenksäule mit einfachen Mitteln gemäß einer Lenksäule mit einem Lenkmomentverstärker betreibbar.

Gemäß einem zweiten Aspekt der Erfindung wird die Aufgabe durch ein Kraftfahrzeug mit einer Karosserie und einem Steuerungssystem zum autonomen Fahren gelöst. Erfindungsgemäß weist das Kraftfahrzeug eine multifunktionale Lenksäule gemäß dem ersten Aspekt der Erfindung auf. Der Lenkradanschluss der Lenksäule ist mit einem Lenkrad des Kraftfahrzeugs verdrehsicher mechanisch gekoppelt. Der Lenkgetriebeanschluss ist mit einem Lenkgetriebeeingang eines Lenkgetriebes des Kraftfahrzeugs zum Verstellen eines Lenkwinkels lenkbarer Räder des Kraftfahrzeugs verdrehsicher mechanisch gekoppelt. Das Steuerungssystem ist zum autonomen Fahren des Kraftfahrzeugs ausgebildet. Hierfür ist das Steuerungssystem vorzugsweise mit einer dritten Aktuatorvorrichtung zum Einbringen eines Lenkmoments in das Lenkgetriebe oder auf eine Lenkachse des Kraftfahrzeugs ausgebildet. Für den Steer by Wire Betriebsmodus ist das Steuerungssystem vorzugsweise ausgebildet, den ersten Lenkwinkel zu erfassen und die dritte Aktuatorvorrichtung entsprechend anzusteuern. Für den autonomen Betriebsmodus ist das Steuerungssystem mit einer Sensorik des Kraftfahrzeugs zum Erfassen einer Umgebung des Kraftfahrzeugs gekoppelt, um die dritte Aktuatorvorrichtung entsprechend anzusteuern, um Kollisionen mit anderen Objekten sowie ein unbeabsichtigtes Verlassen der Fahrbahn zu vermeiden. Zusätzlich ist es bevorzugt, dass das Steuerungssystem mit einem Navigationssystem des Kraftfahrzeugs gekoppelt ist, um aus Kursdaten des Navigationssystems sowie aktuellen Positionsdaten die dritte Aktuatorvorrichtung entsprechend anzusteuern. Es ist bevorzugt, dass die Steuerungsvorrichtung als Teil des Steuerungssystems ausgebildet ist.

Bei dem beschriebenen Kraftfahrzeug ergeben sich sämtliche Vorteile, die bereits zu der multifunktionalen Lenksäule gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise mittels der Lenksäule drei Betriebsmodi realisierbar sind, nämlich ein Steer by Wire Betriebsmodus, ein autonomer Betriebsmodus sowie ein Notbetriebsmodus. Über die erste Aktuatorvorrichtung und die Steuerungsvorrichtung kann im Steer by Wire Betriebsmodus ein Force Feedback an dem Lenkrohr simuliert werden, um dem Fahrer ein realitätsnahes Lenkgefühl zu geben, welches von der Straße auf das Lenksystem wirkende Kräfte widerspiegelt bzw. zumindest teilweise widerspiegelt. Im autonomen Betriebsmodus ist eine derartige mechanische Entkopplung des Lenkrohrs vom Lenkgetriebe erzielbar, dass ein Verändern des zweiten Lenkwinkels keine Veränderung des ersten Lenkwinkels bewirkt. Im Notbetriebsmodus sind Lenkrohr und Lenkgetriebeanschluss miteinander derart mechanisch gekoppelt, dass eine Veränderung des ersten Lenkwinkels eine entsprechende Veränderung des zweiten Lenkwinkels bewirkt. Das erfindungsgemäße Kraftfahrzeug hat den weiteren Vorteil, dass ein sicheres Umschalten vom autonomen Betriebsmodus in den Steer by Wire Betriebsmodus sowie den Notbetriebsmodus auch dann möglich ist, wenn der zweite Lenkwinkel von 0° verschieden ist, das Kraftfahrzeug also nicht geradeaus fährt. Der Fahrer kann die Kontrolle des Kraftfahrzeugs demnach auch während einer Kurvenfahrt sicher übernehmen.

Gemäß einem dritten Aspekt der Erfindung wird die Aufgabe durch ein Verfahren zum Betreiben eines erfindungsgemäßen Kraftfahrzeugs gelöst. Das Verfahren weist die folgenden Verfahrensschritte auf:
- Verstellen des zweiten Lenkwinkels des Lenkgetriebeanschlusses mittels des Steuerungssystems,
- Detektieren des zweiten Lenkwinkels mittels des zweiten Lenkwinkelsensors,
- Detektieren des ersten Lenkwinkels mittels des ersten Lenkwinkelsensors,
- Drehen des Lenkrohres um die Lenkrohrachse mittels der von der Steuerungsvorrichtung gesteuerten ersten Aktuatorvorrichtung derart, dass der erste Lenkwinkel dem zweiten Lenkwinkel entspricht,
- Umschalten auf einen manuellen Betriebsmodus mittels des Steuerungssystems.

Die Lenkgetriebekupplung ist bei der Durchführung des erfindungsgemäßen Verfahrens in der Entkoppelstellung angeordnet, sodass ein relatives Verdrehen des Lenkgetriebeanschlusses zum Lenkrohr möglich ist. Zu Beginn der Durchführung des erfindungsgemäßen Verfahrens ist das Kraftfahrzeug im autonomen Betriebsmodus. Im autonomen Betriebsmodus wird zum Lenken des Kraftfahrzeugs der zweite Lenkwinkel mittels des Steuerungssystems verstellt. Hierfür weist das Steuerungssystem vorzugsweise eine dritte Aktuatorvorrichtung auf, welche vorzugsweise mittels der Steuerungsvorrichtung ansteuerbar ist. Es kann erfindungsgemäß vorgesehen sein, dass das Lenkrad in diesem Zustand in einem zurückgefahrenen Zustand, insbesondere in eine Instrumententafel des Kraftfahrzeugs versenkt, angeordnet ist. In dem zurückgefahrenen Zustand beträgt der erste Lenkwinkel vorzugsweise 0°. In diesem autonomen Betriebszustand wird der zweite Lenkwinkel mittels des zweiten Lenkwinkelsensors detektiert. Das Detektieren des zweiten Lenkwinkels erfolgt vorzugsweise kontinuierlich oder wird mit einer derartigen Frequenz wiederholt, dass ein tatsächlicher IST-Zustand des zweiten Lenkwinkels während des Betriebs des Kraftfahrzeugs hinreichend präzise sowie aktuell detektiert wird. Ferner wird der erste Lenkwinkel mittels des ersten Lenkwinkelsensors detektiert. Das Detektieren des ersten Lenkwinkels erfolgt vorzugsweise kontinuierlich oder wird mit einer derartigen Frequenz wiederholt, dass ein tatsächlicher IST-Zustand des ersten Lenkwinkels während des Betriebs des Kraftfahrzeugs hinreichend präzise sowie aktuell detektiert wird. Vorzugsweise erfolgt ein Detektieren des ersten Lenkwinkels und des zweiten Lenkwinkels gleichzeitig bzw. im Wesentlichen gleichzeitig, sodass eine Angleichung des ersten Lenkwinkels dem zweiten Lenkwinkel leicht möglich ist.

Es ist weiter bevorzugt, dass das Lenkrad währenddessen automatisch mittels der Steuerungsvorrichtung sowie der zweiten Aktuatorvorrichtung und ggf. einer weiteren Aktuatorvorrichtung, insbesondere zum relativen Verschwenken des Lenkrohrs zur Lenkkonsole, in eine Lenkposition verstellt wird. In der Lenkposition ist das Lenkrad zur manuellen Benutzung durch den Fahrer des Kraftfahrzeugs angeordnet. Zum Anpassen des ersten Lenkwinkels, also einer relativen rotatorischen Lage des Lenkrads zur Lenkkonsole, wird das Lenkrohr mittels der von der Steuerungsvorrichtung gesteuerten ersten Aktuatorvorrichtung um die Lenkrohrachse gedreht. Dieses Drehen erfolgt derart, dass der erste Lenkwinkel dem zweiten Lenkwinkel solange angepasst wird, bis der erste Lenkwinkel dem zweiten Lenkwinkel entspricht.

Es kann im Rahmen des erfindungsgemäßen Verfahrens vorgesehen sein, dass der erste Lenkwinkel weiteren Änderungen des zweiten Lenkwinkels fortlaufend angepasst wird. Schließlich erfolgt ein Umschalten auf den manuellen Betriebsmodus mittels des Steuerungssystems. Beim Umschalten entspricht der erste Lenkwinkel vorzugsweise dem zweiten Lenkwinkel. Unter einem Entsprechen des ersten Lenkwinkels und des zweiten Lenkwinkels wird im Rahmen der Erfindung verstanden, dass der erste Lenkwinkel mit dem zweiten Lenkwinkel in einer derartigen Relation steht, die für ein manuelles Steuern des Kraftfahrzeugs in der jeweiligen Fahrsituation ausgebildet ist. Dies kann also bedeuten, dass der erste Lenkwinkel gleich dem zweiten Lenkwinkel ist. Ferner kann dieses bedeuten, dass der erste Lenkwinkel mit einem positiven Faktor multiplizierbar ist, um den zweiten Lenkwinkel zu erhalten, wobei der Faktor vorzugsweise derart geschwindigkeitsabhängig ist, dass dieser mit steigender Geschwindigkeit abnimmt. Unter dem manuellen Betriebsmodus wird insbesondere der Steer by Wire Betriebsmodus verstanden. Das Lenkrohr und das Lenkgetriebe sind derart miteinander gekoppelt, dass bei einem Verstellen des ersten Lenkwinkels der zweite Lenkwinkel mittels der dritten Aktuatorvorrichtung und bei einem Verstellen des zweiten Lenkwinkels der erste Lenkwinkel mittels der ersten Aktuatorvorrichtung verstellbar ist. Dieses Verstellen erfolgt vorzugsweise mittels des Steuerungssystems. Alternativ hierzu kann das Umschalten auf den manuellen Betriebsmodus auch durch ein Verstellen der Lenkgetriebekupplung in die Koppelstellung erfolgen, sodass das Lenkrohr und das Lenkgetriebe mechanisch direkt miteinander gekoppelt sind.

Bei dem beschriebenen Verfahren ergeben sich sämtliche Vorteile, die bereits zu der erfindungsgemäßen Lenksäule gemäß dem ersten Aspekt der Erfindung sowie dem erfindungsgemäßen Kraftfahrzeug gemäß dem zweiten Aspekt der Erfindung beschrieben worden sind. Demnach hat das erfindungsgemäße Verfahren gegenüber herkömmlichen Verfahren den Vorteil, dass mit einfachen Mitteln sowie auf eine kostengünstige Art und Weise ein sicheres Umschalten von einem autonomen Betriebsmodus in den Steer by Wire Betriebsmodus sowie den Notbetriebsmodus auch dann möglich ist, wenn der zweite Lenkwinkel von 0° verschieden ist, das Kraftfahrzeug also nicht geradeaus fährt. Der Fahrer kann die Kontrolle des Kraftfahrzeugs demnach auch während einer Kurvenfahrt sicher übernehmen.

Eine bevorzugte Ausführungsform einer erfindungsgemäßen multifunktionalen Lenksäule für ein Kraftfahrzeug, eines erfindungsgemäßen Kraftfahrzeugs sowie ein erfindungsgemäßes Verfahren werden nachfolgend anhand von Zeichnungen näher erläutert. Es zeigen jeweils schematisch:
- Figur 1: in einer Draufsicht von unten eine bevorzugte Ausführungsform einer erfindungsgemäßen multifunktionalen Lenksäule,
- Figur 2: in einer Draufsicht von oben die Lenksäule aus Figur 1,
- Figur 3: in einer Seitenansicht die Lenksäule aus Figur 1 in einer eingefahrenen Stellung,
- Figur 4: in einer Seitenansicht die Lenksäule aus Figur 1 in einer ausgefahrenen Stellung,
- Figur 5: in einer Seitenansicht die Lenksäule aus Figur 1 in einer oberen Position,
- Figur 6: in einer Seitenansicht die Lenksäule aus Figur 1 in einer unteren Position,
- Figur 7: in einer Seitenansicht eine bevorzugte Ausführungsform eines erfindungsgemäßen Kraftfahrzeugs, und
- Figur 8: in einem Ablaufdiagramm eine bevorzugte Ausführungsform des erfindungsgemäßen Verfahrens.

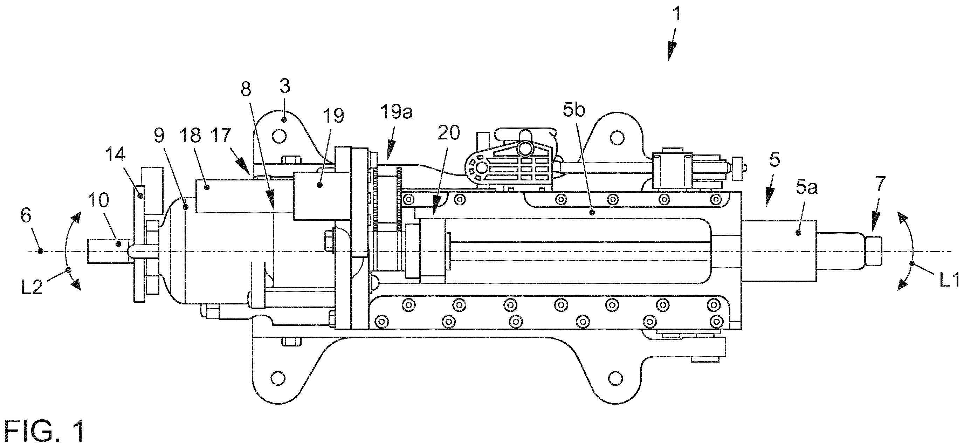

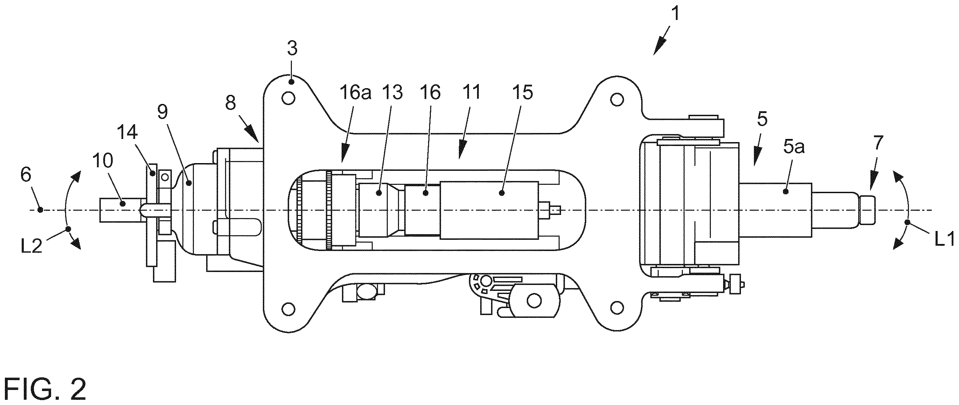

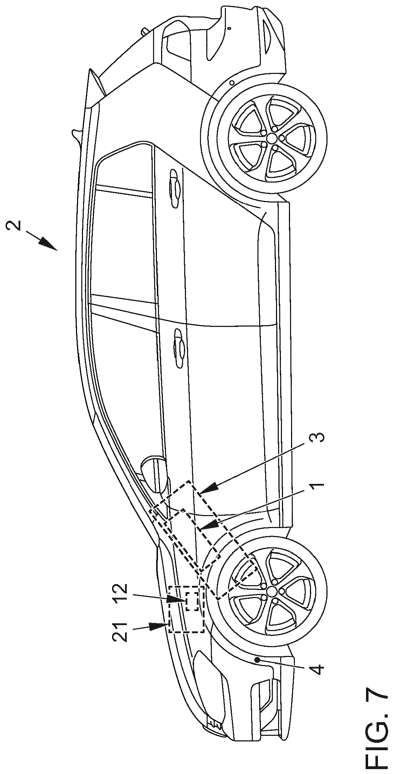

In Fig. 1 ist eine bevorzugte Ausführungsform einer erfindungsgemäßen multifunktionalen Lenksäule 1 schematisch in einer Draufsicht von unten dargestellt. Fig. 2 zeigt dieselbe Lenksäule 1 schematisch in einer Draufsicht von oben. Die Lenksäule 1 weist eine Lenkkonsole 3 auf, die zum Anbinden der Lenksäule 1 an eine Karosserie 4 eines Kraftfahrzeugs 2 (vgl. Fig. 7) ausgebildet ist. An der Lenkkonsole 1 ist ein Lenkrohr 5 der Lenksäule 1 verschwenkbar gehalten. Das Lenkrohr 5 weist ein oberes Lenkrohr 5a und ein unteres Lenkrohr 5b mit einer gemeinsamen Lenkrohrachse 6 auf, wobei das obere Lenkrohr 5a zumindest teilweise in das untere Lenkrohr 5b einschiebbar ist. An einem dem unteren Lenkrohr 5b abgewandten Ende weist das obere Lenkrohr 5a einen Lenkradanschluss 7 zum Anbinden eines nicht dargestellten Lenkrads des Kraftfahrzeugs 2 auf. An einem dem oberen Lenkrohr 5a abgewandten Ende weist das untere Lenkrohr 5b ein Lenkgetriebeende 8 auf, an welchem eine als Magnetkupplung ausgebildete Lenkgetriebekupplung 9 angeordnet ist. Auf einer dem Lenkrohr 5 abgewandten Ende weist die Lenkgetriebekupplung 9 einen Lenkgetriebeanschluss 10 auf, welcher zum Anbinden eines nicht dargestellten Lenkgetriebes des Kraftfahrzeugs 2 ausgebildet ist.

In Fig. 2 ist eine erste Aktuatorvorrichtung 11 erkennbar, welche zum Drehen des Lenkrohrs 5 um die Lenkrohrachse 6 ausgebildet ist. Hierfür weist die erste Aktuatorvorrichtung 11 einen ersten Elektromotor 15 auf, der über ein erstes Planetengetriebe 16 sowie einen ersten Riementrieb 16a mit dem Lenkrohr 5 drehsynchron mechanisch gekoppelt ist. Am Riementrieb 16a ist ein erster Lenkwinkelsensor 13 zum Erfassen eines ersten Lenkwinkels L1 des Lenkrohrs 5 angeordnet. In einer Neutralstellung, in welcher das Lenkrohr 5 für ein Geradeausfahren angeordnet ist, beträgt der erste Lenkwinkel L1 0°. Mittels der ersten Aktuatorvorrichtung 11 ist der erste Lenkwinkel L1 gezielt verstellbar. In Fig. 1 ist eine zweite Aktuatorvorrichtung 17 erkennbar, mittels welcher das obere Lenkrohr 5a relativ zum unteren Lenkrohr 5b entlang der Lenkrohrachse 6 verstellbar ist. Die zweite Aktuatorvorrichtung 17 weist einen zweiten Elektromotor 18 auf, welcher über ein zweites Planetengetriebe 19 und einen zweiten Riementrieb 19a mit einem Spindeltrieb 20 mechanisch gekoppelt ist. Der Spindeltrieb 20 ist mit dem oberen Lenkrohr 5a zum axialen Verschieben des oberen Lenkrohrs 5a gekoppelt. An dem Lenkgetriebeanschluss 10 ist ein zweiter Lenkwinkelsensor 14 zum Erfassen eines zweiten Lenkwinkels L2 des Lenkgetriebeanschlusses 10 angeordnet.

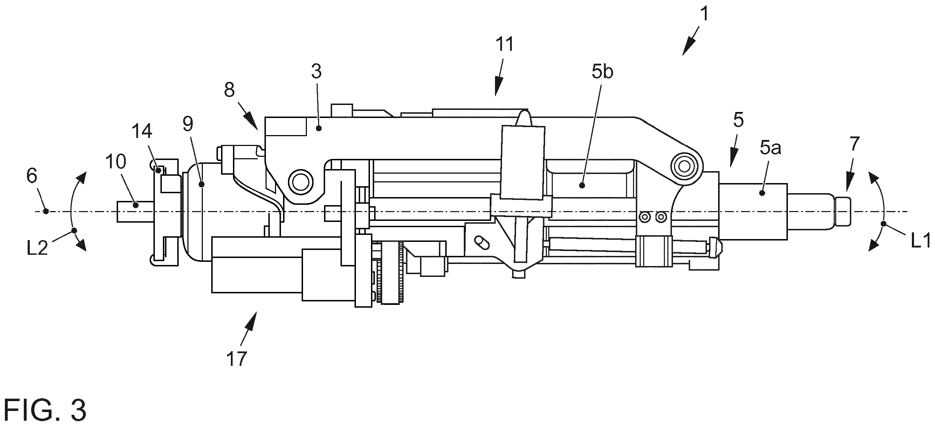

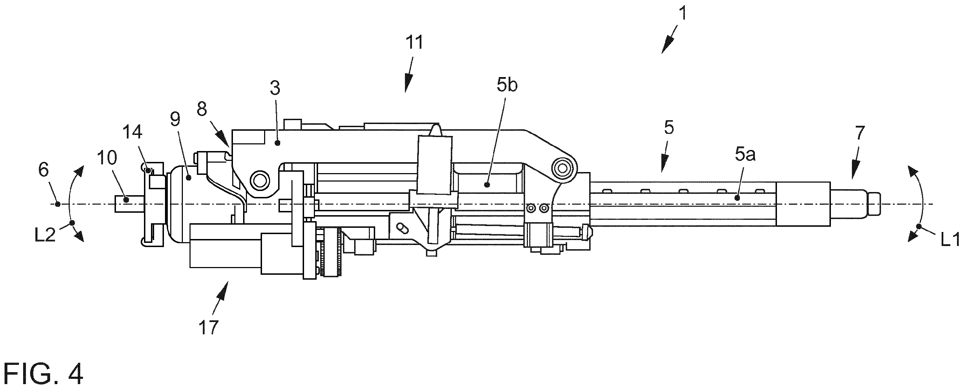

In Fig. 3 ist die Lenksäule 1 aus Fig. 1 in einer eingefahrenen Stellung schematisch in einer Seitenansicht dargestellt. Fig. 4 zeigt die Lenksäule 1 in einer ausgefahrenen Stellung. In der eingefahrenen Stellung ist ein wesentlicher Teilbereich des oberen Lenkrohrs 5a in dem unteren Lenkrohr 5b angeordnet. Diese eingefahrene Stellung kann beispielsweise eingenommen werden, um das Lenkrad in einer Instrumententafel des Kraftfahrzeugs 2 zu versenken, um dem Fahrer beim autonomen Betriebsmodus des Kraftfahrzeugs einen möglichst großen Freiraum bereitzustellen. Das Verfahren zwischen der eingefahrenen und der ausgefahrenen Stellung ist mittels der zweiten Aktuatorvorrichtung 17 möglich, welche mittels einer Steuerungsvorrichtung 12 (vgl. Fig. 7) steuerbar ist. In der ausgefahrenen Stellung ist das obere Lenkrohr 5a maximal aus dem unteren Lenkrohr 5b ausgefahren.

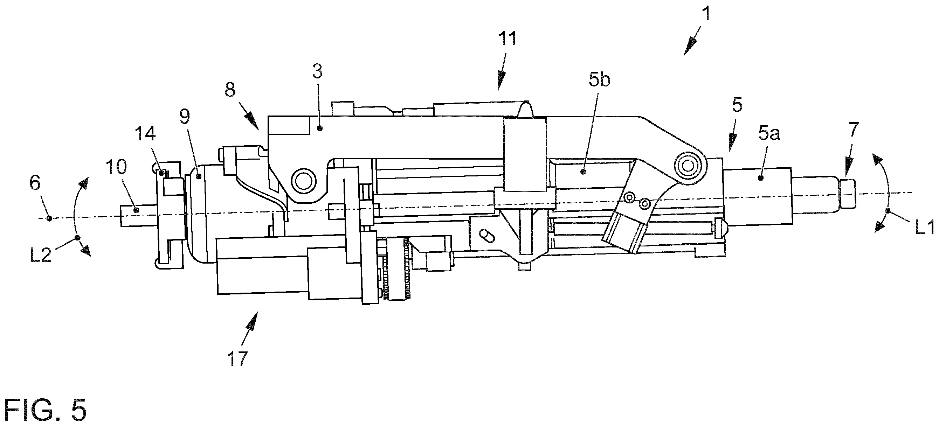

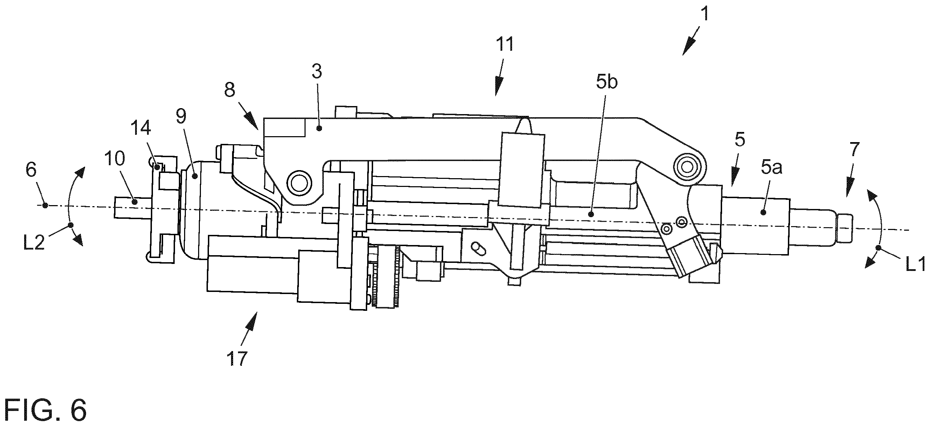

Fig. 5 zeigt die Lenksäule aus Fig. 1 in einer oberen Position, Fig. 6 zeigt die Lenksäule 1 in einer unteren Position. In der oberen Position ist das obere Lenkrohr 5a um eine Schwenkachse quer zur Lenkrohrachse 6 maximal zur Lenkkonsole 3 hin verschwenkt. Die obere Position ist beispielsweise für besonders große Fahrer geeignet. In der unteren Position ist das obere Lenkrohr 5a maximal um die Schwenkachse quer zur Lenkrohrachse 6 von der Lenkkonsole 3 weg verschwenkt. Die untere Position ist beispielsweise für besonders kleine Fahrer geeignet. Für das Verschwenken zwischen der unteren Position und der oberen Position kann die Lenksäule 1 erfindungsgemäß eine nicht dargestellte weitere Aktuatorvorrichtung aufweisen, welche vorzugsweise einen inneren Widerstand aufweist, durch den ein Verbleib in einer gewählten Position gewährleistbar ist, wenn die weitere Aktuatorvorrichtung nicht angesteuert wird. Die weitere Aktuatorvorrichtung ist vorzugsweise mittels der Steuerungsvorrichtung 12 steuerbar.

In Fig. 7 ist eine bevorzugte Ausführungsform eines erfindungsgemäßen Kraftfahrzeugs 2 schematisch in einer Seitenansicht abgebildet. Das Fahrzeug 2 weist eine Karosserie 4 und eine erfindungsgemäße Lenksäule 1 mit einer Steuerungsvorrichtung 12 auf. Die Steuerungsvorrichtung 12 ist zum Steuern von mechanischen Komponenten der Lenksäule sowie zum Auswerten des vom ersten Lenkwinkelsensor 13 erfassten ersten Lenkwinkels L1 und des vom zweiten Lenkwinkelsensor 14 erfassten zweiten Lenkwinkels L2 ausgebildet. Die Lenksäule 1 ist über deren Lenkkonsole 3 an der Karosserie 4 fixiert. Ferner weist das Kraftfahrzeug 2 ein Steuerungssystem 21 zum Steuern des Kraftfahrzeugs 2 in einem autonomen Betriebsmodus auf. In diesem Ausführungsbeispiel ist die Steuerungsvorrichtung 12 als Teil des Steuerungssystems 21 ausgebildet.

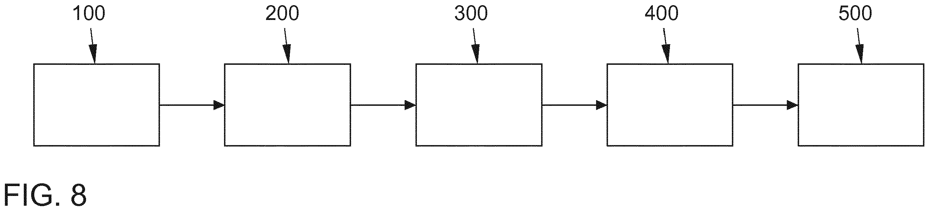

Fig. 8 zeigt eine bevorzugte Ausführungsform des erfindungsgemäßen Verfahrens in einem Ablaufdiagramm. In einem ersten Verfahrensschritt 100 wird im autonomen Betriebsmodus des Kraftfahrzeugs 2 der zweite Lenkwinkel L2 des Lenkgetriebeanschlusses 10 mittels des Steuerungssystems 21 verstellt. Hierdurch wird das Kraftfahrzeug 2 gelenkt. In einem zweiten Verfahrensschritt 200 wird der zweite Lenkwinkel L2 mittels des zweiten Lenkwinkelsensors 14 detektiert. Das Detektieren hat den Vorteil, dass das Verstellen des zweiten Lenkwinkels L2 auf diese Weise besonders exakt durchführbar ist. In einem dritten Verfahrensschritt 300 wird der erste Lenkwinkel L1 mittels des ersten Lenkwinkelsensors 13 detektiert. Das Detektieren des ersten Lenkwinkels L1 und/oder zweiten Lenkwinkels L2 erfolgt vorzugsweise wiederholt oder kontinuierlich. In einem vierten Verfahrensschritt 400 wird das Lenkrohr 5 um die Lenkrohrachse 6 mittels der von der Steuerungsvorrichtung 12 gesteuerten ersten Aktuatorvorrichtung 11 derart gedreht, dass der erste Lenkwinkel L1 dem zweiten Lenkwinkel L2 entspricht. In einem fünften Verfahrensschritt 500 wird mittels des Steuerungssystems 21 auf einen manuellen Betriebsmodus des Kraftfahrzeugs 2 umgeschaltet. In diesem Zustand ist eine Veränderung des zweiten Lenkwinkels L2 durch Verstellen des ersten Lenkwinkels L1 möglich.

### Bezugszeichenliste

| | | | |
|---|---|---|---|
| 1 | Lenksäule | L1 | erster Lenkwinkel |
| 2 | Kraftfahrzeug | L2 | zweiter Lenkwinkel |
| 3 | Lenkkonsole | | |
| 4 | Karosserie | | |
| 5 | Lenkrohr | | |
| 5a | oberes Lenkrohr | | |
| 5b | unteres Lenkrohr | | |
| 6 | Lenkrohrachse | | |
| 7 | Lenkradanschluss | | |
| 8 | Lenkgetriebeende | | |
| 9 | Lenkgetriebekupplung | | |
| 10 | Lenkgetriebeanschluss | | |
| 11 | erste Aktuatorvorrichtung | | |
| 12 | Steuerungsvorrichtung | | |
| 13 | erster Lenkwinkelsensor | | |
| 14 | zweiter Lenkwinkelsensor | | |
| 15 | erster Elektromotor | | |
| 16 | erstes Planetengetriebe | | |
| 16a | erster Riementrieb | | |
| 17 | zweite Aktuatorvorrichtung | | |
| 18 | zweiter Elektromotor | | |
| 19 | zweites Planetengetriebe | | |
| 19a | zweiter Riementrieb | | |
| 20 | Spindeltrieb | | |
| 21 | Steuerungssystem | | |
| 100 | erster Verfahrensschritt | | |
| 200 | zweiter Verfahrensschritt | | |
| 300 | dritter Verfahrensschritt | | |
| 400 | vierter Verfahrensschritt | | |
| 500 | fünfter Verfahrensschritt | | |

## Patentansprüche

1. Multifunktionale Lenksäule (1) für ein Kraftfahrzeug (2), aufweisend eine Lenkkonsole (3) zum Anbinden der Lenksäule (1) an eine Karosserie (4) des Kraftfahrzeugs (2), ein an der Lenkkonsole (3) gehaltenes Lenkrohr (5) mit einer Lenkrohrachse (6), einem Lenkradanschluss (7) zum mechanischen Koppeln der Lenksäule (5) mit einem Lenkrad und einem Lenkgetriebeende (8) an dem eine Lenkgetriebekupplung (9) mit einem Lenkgetriebeanschluss (10) zum mechanischen Koppeln mit einem Lenkgetriebe des Kraftfahrzeugs (2) angeordnet ist, eine erste Aktuatorvorrichtung (11) zum Verstellen eines ersten Lenkwinkels (L1) des Lenkradanschlusses (7) um die Lenkrohrachse (6) relativ zur Lenkkonsole (3) sowie eine Steuerungsvorrichtung (12) zum Steuern der ersten Aktuatorvorrichtung (11) und der Lenkgetriebekupplung (9), wobei die Lenkgetriebekupplung (9) zum mechanischen Koppeln des Lenkrohrs (5) mit dem Lenkgetriebe des Kraftfahrzeugs (2) in einer Koppelstellung für einen Notfallbetrieb und zum mechanischen Entkoppeln des Lenkrohrs (5) von dem Lenkgetriebe des Kraftfahrzeugs (2) in einer Entkoppelstellung für einen Normalbetrieb ausgebildet ist, wobei der Normalbetrieb zwei Betriebsmodi aufweist, einen Steer by Wire Betriebsmodus und einen autonomen Betriebsmodus,
**dadurch gekennzeichnet,**
**dass** die Lenksäule (1) einen ersten Lenkwinkelsensor (13) zum Erfassen des ersten Lenkwinkels (L1) des Lenkradanschlusses (7) um die Lenkrohrachse (6) sowie einen zweiten Lenkwinkelsensor (14) zum Erfassen eines zweiten Lenkwinkels (L2) des Lenkgetriebeanschlusses (10) um die Lenkrohrachse (6) aufweist, wobei die Steuerungsvorrichtung (12) ausgebildet ist, die erste Aktuatorvorrichtung (11) derart zu steuern, dass der erste Lenkwinkel (L1) dem zweiten Lenkwinkel (L2) angepasst wird, und wobei die Steuerungsvorrichtung (12) weiter ausgebildet ist, die Lenkgetriebekupplung (9) in die Koppelstellung zu verstellen, wenn der erste Lenkwinkel (L1) dem zweiten Lenkwinkel (L2) entspricht, wobei ein sicheres Umschalten vom autonomen Betriebsmodus in den Steer by Wire Betriebsmodus sowie den Notbetriebsmodus auch dann möglich ist, wenn der zweite Lenkwinkel von 0° verschieden ist,
wobei das Lenkrohr (5) ein oberes Lenkrohr (5a) und ein unteres Lenkrohr (5b) aufweist, wobei das obere Lenkrohr (5a) und das untere Lenkrohr (5b) relativ zueinander entlang der Lenkrohrachse (6) verschiebbar sind, wobei die Lenksäule (1) eine zweite Aktuatorvorrichtung (17) zum relativ Verschieben des oberen Lenkrohres (5a) zum unteren Lenkrohr (5b) aufweist, und wobei die Steuerungsvorrichtung (12) ausgebildet ist, die zweite Aktuatorvorrichtung (17) zu steuern.

2. Lenksäule (1) nach Anspruch 1,
**dadurch gekennzeichnet,**
**dass** die erste Aktuatorvorrichtung (11) einen ersten Elektromotor (15) und ein erstes Planetengetriebe (16) aufweist, wobei der erste Elektromotor (15) über das erste Planetengetriebe (16) mit dem Lenkrohr (5) derart mechanisch gekoppelt ist, dass das Lenkrohr (5) mittels der ersten Aktuatorvorrichtung (11) um die Lenkrohrachse (6) drehbar ist.

3. Lenksäule (1) nach Anspruch 2,
**dadurch gekennzeichnet,**
**dass** die zweite Aktuatorvorrichtung (17) einen zweiten Elektromotor (18), ein zweites Planetengetriebe (19) sowie einen Spindeltrieb (20) aufweist, wobei der zweite Elektromotor (18) über das zweite Planetengetriebe (19) und den Spindeltrieb (20) mit dem oberen Lenkrohr (5a) oder dem unteren Lenkrohr (5b) mechanisch gekoppelt ist.

4. Lenksäule (1) nach einem der vorangegangenen Ansprüche,
**dadurch gekennzeichnet,**
**dass** die Steuerungsvorrichtung (12) ausgebildet ist, die erste Aktuatorvorrichtung (11) bei in der Entkoppelstellung eingestellter Lenkgetriebekupplung (9) derart zu steuern, dass die erste Aktuatorvorrichtung (11) den ersten Lenkwinkel (L1) in Abhängigkeit einer Veränderung des zweiten Lenkwinkels (L2) verändert.

5. Lenksäule (1) nach einem der vorangegangenen Ansprüche,
**dadurch gekennzeichnet,**
**dass** die Lenkgetriebekupplung (9) als Magnetkupplung ausgebildet ist.

6. Lenksäule (1) nach Anspruch 5,
**dadurch gekennzeichnet,**
**dass** die Lenkgetriebekupplung (9) derart ausgebildet ist, dass die Lenkgetriebekupplung (9) bei Beaufschlagung mit einem Steuerstrom in die Entkoppelstellung und bei abgestelltem Steuerstrom automatisch in die Koppelstellung gebracht wird.

7. Lenksäule (1) nach einem der vorangegangenen Ansprüche,
**dadurch gekennzeichnet,**
**dass** die Steuerungsvorrichtung (12) derart ausgebildet ist, die erste Aktuatorvorrichtung (11) bei in der Koppelstellung eingestellter Lenkgetriebekupplung (9) zum Verstärken eines über den Lenkradanschluss (7) eingebrachten Lenkmoments zu steuern.

8. Kraftfahrzeug (2) mit einer Karosserie (4) und einem Steuerungssystem (21) zum autonomen Fahren,
**dadurch gekennzeichnet,**
**dass** das Kraftfahrzeug (2) eine multifunktionale Lenksäule (1) nach einem der vorangegangenen Ansprüche aufweist.

9. Verfahren zum Betreiben eines Kraftfahrzeugs (2) mit einer multifunktionalen Lenksäule (1) nach Anspruch 8, aufweisend die folgenden Schritte:
- Verstellen des zweiten Lenkwinkels (L2) des Lenkgetriebeanschlusses (10) mittels des Steuerungssystems (21),
- Detektieren des zweiten Lenkwinkels (L2) mittels des zweiten Lenkwinkelsensors (14),
- Detektieren des ersten Lenkwinkels (L1) mittels des ersten Lenkwinkelsensors (13),
- Drehen des Lenkrohres (5) um die Lenkrohrachse (6) mittels der von der Steuerungsvorrichtung (12) gesteuerten ersten Aktuatorvorrichtung (11) derart, dass der erste Lenkwinkel (L1) dem zweiten Lenkwinkel (L2) entspricht,
- Umschalten auf einen manuellen Betriebsmodus mittels des Steuerungssystems (21).

## Claims

1. Multifunctional steering column (1) for a motor vehicle (2), comprising a steering console (3) for connecting the steering column (1) to a chassis (4) of the motor vehicle (2); a steering tube (5) having a steering tube axis (6) and which is held on the steering console (3); a steering wheel connection (7) for mechanically coupling the steering column (5) with a steering wheel and a steering gear end (8) on which is arranged a steering gear clutch (9) having a steering gear connection (10) for mechanically coupling with a steering gear of the motor vehicle (2); a first actuator device (11) for adjusting a first steering angle (L1) of the steering wheel connection (7) about the steering tube axis (6) relative to the steering console (3); as well as a control device (12) for controlling the first actuator device (11) and the steering gear clutch (9), wherein the steering gear clutch (9) is designed for mechanically coupling the steering tube (5) with the steering gear of the motor vehicle (2) in a coupling position for an emergency operation, and for mechanically decoupling the steering tube (5) from the steering gear of the motor vehicle (2) in a decoupling position for a normal operation, wherein normal operation has two operating modes: a steer-by-wire operating mode and an autonomous operating mode,
**characterized in that**
the steering column (1) has a first steering angle sensor (13) for detecting the first steering angle (L1) of the steering wheel connection (7) about the steering tube axis (6), and a second steering angle sensor (14) for detecting a second steering angle (L2) of the steering gear connection (10) about the steering tube axis (6), wherein the control device (12) is designed to control the first actuator device (11) such that the first steering angle (L1) is adapted to the second steering angle (L2), and
wherein the control device (12) is further designed to adjust the steering gear coupling (9) into the coupling position when the first steering angle (L1) corresponds to the second steering angle (L2), wherein a reliable switching from the autonomous operating mode into the steer-by-wire operating mode and the emergency operating mode is possible even when the second steering angle differs from 0°,
wherein the steering tube (5) has an upper steering tube (5a) and a lower steering tube (5b); wherein the upper steering tube (5a) and the lower steering tube (5b) are displaceable relative to each other along the steering tube axis (6); wherein the steering column (1) has a second actuator device (17) for the relative displacement of the upper steering tube (5a) with respect to the lower steering tube (5b); and wherein the control device (12) is designed to control the second actuator device (17).

2. Steering column (1) according to claim 1,
**characterized in that**
the first actuator device (11) has a first electric motor (15) and a first planetary gear (16), wherein the first electric motor (15) is mechanically coupled to the steering tube (5) via the first planetary gear (16) in such a way that the steering tube (5) can be rotated about the steering tube axis (6) by means of the first actuator device (11).

3. Steering column (1) according to claim 2,
**characterized in that**
the second actuator device (17) has a second electric motor (18), a second planetary gear (19), and a spindle drive (20), wherein the second electric motor (18) is mechanically coupled to the upper steering tube (5a) or the lower steering tube (5b) via the second planetary gear (19) and the spindle drive (20).

4. Steering column (1) according to any one of the preceding claims,
**characterized in that**
the control device (12) is designed to control the first actuator device (11) if the steering gear clutch (9) is set in the uncoupled position, such that the first actuator device (11) changes the first steering angle (L1) depending on a change in the second steering angle (L2).

5. Steering column (1) according to any one of the preceding claims,
**characterized in that**
the steering gear clutch (9) is designed as a magnetic clutch.

6. Steering column (1) according to claim 5,
**characterized in that**
the steering gear clutch (9) is designed in such a way that the steering gear clutch (9) is brought into the uncoupling position if charged with a control current, and is automatically brought into the coupling position if the control current is cut off.

7. Steering column (1) according to any one of the preceding claims,
**characterized in that**
the control device (12) is designed in such a way as to control the first actuator device (11), when the steering gear clutch (9) is set in the coupling position, to intensify a steering torque introduced via the steering wheel connection (7).

8. Motor vehicle (2) having a chassis (4) and a control system (21) for autonomous driving,
**characterized in that**
the motor vehicle (2) has a multifunctional steering column (1) according to any one of the preceding claims.

9. Method for operating a motor vehicle (2) having a multifunctional steering column (1) according to claim 8, comprising the following steps:
- adjusting the second steering angle (L2) of the steering gear connection (10) by means of the control system (21),
- detecting the second steering angle (L2) by means of the second steering angle sensor (14),
- detecting the first steering angle (L1) by means of the first steering angle sensor (13),
- rotating the steering tube (5) about the steering tube axis (6), by means of the first actuator device (11) controlled by the control device (12), in such a way that the first steering angle (L1) corresponds to the second steering angle (L2),
- switching to a manual operating mode by means of the control system (21).

## Revendications

1. Colonne de direction multifonctionnelle (1) pour un véhicule automobile (2), présentant une console de direction (3) pour la fixation de la colonne de direction (1) sur une carrosserie (4) du véhicule automobile (2), un tube de direction (5) maintenu sur la console de direction (3) comprenant un axe de tube de direction (6), un raccord de volant (7) pour un accouplement mécanique de la colonne de direction (5) avec un volant et une extrémité de mécanisme de direction (8) au niveau de laquelle est disposé un accouplement de mécanisme de direction (9) avec un raccord de mécanisme de direction (10) pour l'accouplement mécanique avec un mécanisme de direction du véhicule automobile (2), un premier dispositif actionneur (11) pour le réglage d'un premier angle de direction (L1) du raccord de volant (7) autour de l'axe de tube de direction (6) par rapport à la console de direction (3) ainsi qu'un dispositif de commande (12) pour la commande du premier dispositif actionneur (11) et de l'accouplement de mécanisme de direction (9), l'accouplement de mécanisme de direction (9) étant formé pour l'accouplement mécanique du tube de direction (5) avec le mécanisme de direction du véhicule automobile (2) dans une position d'accouplement pour un fonctionnement d'urgence et pour le découplage mécanique du tube de direction (5) par rapport au mécanisme de direction du véhicule automobile (2) dans une position de découplage pour un fonctionnement normal, le fonctionnement normal présentant deux modes de fonctionnement, un mode de fonctionnement à commande par câble et un mode de fonctionnement autonome,
**caractérisée**
**en ce que** la colonne de direction (1) présente un premier capteur d'angle de direction (13) destiné à détecter le premier angle de direction (L1) du raccord de volant (7) autour de l'axe de tube de direction (6) ainsi qu'un second capteur d'angle de direction (14) destiné à détecter un second angle de direction (L2) du raccord de mécanisme de direction (10) autour de l'axe de tube de direction (6), le dispositif de commande (12) étant conçu pour commander le premier dispositif actionneur (11) de manière à ce que le premier angle de direction (L1) soit ajusté au second angle de direction (L2) et
le dispositif de commande (12) étant en outre conçu pour régler l'accouplement de mécanisme de direction (9) dans la position d'accouplement, lorsque le premier angle de direction (L1) correspond au second angle de direction (L2), une commutation sécurisée du mode de fonctionnement autonome au mode de fonctionnement à commande par câble comme au mode de fonctionnement d'urgence étant également possible lorsque le second angle de direction est différent de 0°,
le tube de direction (5) présentant un tube de direction supérieur (5a) et un tube de direction inférieur (5b), le tube de direction supérieur (5a) et le tube de direction inférieur (5b) pouvant être déplacés l'un par rapport à l'autre le long de l'axe de tube de direction (6), la colonne de direction (1) présentant un second dispositif actionneur (17) pour le déplacement relatif du tube de direction supérieur (5a) par rapport au tube de direction inférieur (5b) et le dispositif de commande (12) étant conçu pour commander le second dispositif actionneur (17).

2. Colonne de direction (1) selon la revendication 1,
**caractérisée**
**en ce que** le premier dispositif actionneur (11) présente un premier moteur électrique (15) et un premier engrenage planétaire (16), le premier moteur électrique (15) étant accouplé mécaniquement au tube de direction (5) par l'intermédiaire du premier engrenage planétaire (16) de telle façon, que le tube de direction (5) peut tourner autour de l'axe de tube de direction (6) au moyen du premier dispositif actionneur (11).

3. Colonne de direction (1) selon la revendication 2,
**caractérisée**
**en ce que** le second dispositif actionneur (17) présente un second moteur électrique (18), un second engrenage planétaire (19) ainsi qu'une transmission à vis (20), le second moteur électrique (18) étant accouplé mécaniquement au tube de direction supérieur (5a) ou au tube de direction inférieur (5b) par l'intermédiaire du second engrenage planétaire (19) et de la transmission à vis (20).

4. Colonne de direction (1) selon l'une quelconque des revendications précédentes,
**caractérisée**
**en ce que** le dispositif de commande (12) est conçu pour commander le premier dispositif actionneur (11) lorsque l'accouplement de mécanisme de direction (9) est dans la position de découplage de telle façon que le premier dispositif actionneur (11) modifie le premier angle de direction (L1) en fonction d'une modification du second angle de direction (L2).

5. Colonne de direction (1) selon l'une quelconque des revendications précédentes,
**caractérisée**
**en ce que** l'accouplement de mécanisme de direction (9) est conçu comme un accouplement magnétique.

6. Colonne de direction (1) selon la revendication 5,
**caractérisée**
**en ce que** l'accouplement de mécanisme de direction (9) est conçu de telle façon que l'accouplement de mécanisme de direction (9) est amené automatiquement dans la position de découplage lors d'une exposition à un courant de commande et dans la position d'accouplement lorsque le courant de commande est coupé.

7. Colonne de direction (1) selon l'une quelconque des revendications précédentes,
**caractérisée**
**en ce que** le dispositif de commande (12) est conçu de façon à commander le premier dispositif actionneur (11), lorsque l'accouplement de mécanisme de direction (9) est réglé dans la position d'accouplement, pour renforcer un couple de direction appliqué par le biais du raccord de volant (7).

8. Véhicule automobile (2) comprenant une carrosserie (4) et un système de commande (21) pour la conduite autonome,
**caractérisé**
**en ce que** le véhicule automobile (2) présente une colonne de direction multifonctionnelle (1) selon l'une quelconque des revendications précédentes.

9. Procédé destiné à faire fonctionner un véhicule automobile (2) comprenant une colonne de direction multifonctionnelle (1) selon la revendication 8, présentant les étapes suivantes :
- réglage du second angle de direction (L2) du raccord de mécanisme de direction (10) au moyen du système de commande (21),
- détection du second angle de direction (L2) au moyen du second capteur d'angle de direction (14),
- détection du premier angle de direction (L1) au moyen du premier capteur d'angle de direction (13),
- rotation du tube de direction (5) autour de l'axe de tube de direction (6) au moyen du premier dispositif actionneur (11) commandé par le dispositif de commande (12) de telle façon que le premier angle de direction (L1) corresponde au second angle de direction (L2),
- commutation vers un mode de fonctionnement manuel au moyen du système de commande (21).
